# EUROPEAN PATENT SPECIFICATION

(11) **EP 4 726 372 B1**
(45) Date of publication and mention of the grant of the patent: **12.08.2026**
(21) Application number: 24383113.8
(22) Date of filing: 11.10.2024
(51) Int. Cl.: G01N 21/88, G01N 21/952

(54) **METAL CONTAINER INSPECTION DEVICE FOR DETECTING STRIATIONS AND A METAL CONTAINER MANUFACTURING INSTALLATION COMPRISING SUCH A DEVICE**
INSPEKTIONSVORRICHTUNG FÜR METALLBEHÄLTER ZUR ERKENNUNG VON STREIFEN UND ANLAGE ZUR HERSTELLUNG VON METALLBEHÄLTERN MIT SOLCH EINER VORRICHTUNG
DISPOSITIF D'INSPECTION DE RÉCIPIENTS MÉTALLIQUES POUR LA DÉTECTION DE STRIES ET INSTALLATION DE FABRICATION DE RÉCIPIENTS MÉTALLIQUES COMPRENANT UN TEL DISPOSITIF

(43) Date of publication of application: 15.04.2026
(73) Proprietor: Tech Pro Packag S.L., 01470 Amurrio (ES); Ingenet Automatizacion, S.L., 48410 Orozko (ES)
(72) Inventor: GOMEZ ZUBICARAY, Unai, 01470 AMURRIO (ES); UDAETA SAN MARTIN, Xabier, 48410 OROZKO (ES)
(74) Representative: Galbaian S.Coop.

(56) References cited:
- EP-A1- 4 400 230
- ES-U- 1 008 827
- JP-A- 2004 264 132
- JP-A- H08 105 837

## Description

### TECHNICAL FIELD

The present invention relates to the inspection of metal containers for the detection of striations on the outer lateral surface of metal containers that occur during the extrusion process of metal containers.

### PRIOR ART

Metal containers for containing beverages, food, or cosmetic and pharmaceutical products such as, for example, beverage cans, aerosols for deodorants, etc., are known. Metal containers of this type are manufactured in continuous manufacturing lines from a metal disc, generally an aluminum or steel disc, which is subjected to hot extrusion in an extrusion press in a process called DWI *"Draw and Wall Iron".*

In this manner, the metal disc is first extruded in the extrusion press to form a metal container having a cylindrical body with an outer lateral surface, a bottom, an open end opposite the bottom. In a subsequent phase, the cylindrical body of the container is deformed in a neck forming machine (necking machine) to form a neck at its open end, and finally the container is completed entirely by, for example, in the case of aerosols, placing a sprayer in the neck of the container. Furthermore, the manufacturing process comprises other operations of washing, applying linings on, painting, and screen printing the container, among others.

Technological progress in metal transformation processes has led to containers that have increasingly smaller thicknesses, so it is essential to control the appearance of defects that may compromise the structural integrity of the container. During the extrusion process, striations are generated on the outer lateral surface of the metal container, which in some cases can have a depth that can compromise the integrity of the metal container.

Inspection of the containers is usually carried out on a machine outside the container manufacturing line once the container is finished, or on a machine at the end of the line, where the container is inspected for detection cracks that may cause leakage. Such machines generally comprise an illumination source oriented to illuminate the outer lateral surface of the metal containers, a camera oriented to capture images of the outer lateral surface illuminated by the illumination source, and an image evaluation unit configured for detecting defects in the images captured by the camera.

ES1008827U1 shows a fault detector device on the surface of containers that is intended to detect dirt, erosions, faults in the paint, oxidations, aging of paint and dent in containers.

EP4400230A1 shows an installation for manufacturing metal containers which contains an inspection machine to detect cracks in any area of the finished container.

JP2004264132A shows a method using tangential illumination to detect wrinkles on films attached to the outside of cans.

JPH08105837A shows another method using tangential illumination to inspect labels attached to the outside of cans.

### DISCLOSURE OF THE INVENTION

The object of the invention is to provide a metal container inspection device for detecting striations and a metal container manufacturing installation comprising such a device, as defined in the claims.

One aspect of the invention relates to a metal container inspection device for detecting striations, wherein the metal containers have a cylindrical body with an outer lateral surface, a bottom, an open end opposite the bottom and a longitudinal axis extending along the cylindrical body of the metal container, the striations extending in a direction parallel to the longitudinal axis of the metal container.

The inspection device comprises an illumination source oriented to illuminate the outer lateral surface of the metal containers, a camera oriented to capture images of the outer lateral surface illuminated by the illumination source, and an image evaluation unit configured for detecting striations in the images captured by the camera. The illumination source has an illumination plane incident on the outer lateral surface of the metal containers perpendicular to the striations, the illumination plane forming an angle of between 0-15° with respect to a plane tangent to the outer lateral surface of the metal containers, and wherein the inspection device further comprises an actuator for rotating the metal containers about its longitudinal axis during inspection of the metal containers, such that the camera obtains images of the outer lateral surface of the metal containers during at least one complete revolution of the metal containers about its longitudinal axis, and wherein the image evaluation unit is further configured for measuring a depth value of the striations as a function of the light reflected from the outer lateral surface of the metal containers, comparing the depth value with a depth threshold value and determining whether the depth value exceeds the depth threshold value to check if the metal containers are suitable.

In this way, the illumination source allows light to be sent substantially tangent to the surface of the metal containers, so that if there is a striation on the outer lateral surface of the metal containers, the light will be reflected by the striation and captured by the camera, the greater the depth of the striation the greater the reflected light, whereas, if there is no striation, the light will not be reflected and the image captured by the camera will be of a black hue. This way of sending and receiving light allows the striations to be represented in the images as a bright area on a dark area, the brightness being proportional to the depth of the striation.

Another aspect of the invention relates to a metal container manufacturing installation, comprising:
- a feeder to supply metal discs,
- an extrusion press for extruding metal discs to form metal containers, wherein the metal containers have a cylindrical body with an outer lateral surface, a bottom, an open end opposite the bottom and a longitudinal axis extending along the cylindrical body of the metal container, and wherein the extrusion press has an extruder for forcing the metal discs to deform by passing through a die to transform into metal containers, wherein during extrusion, striations are produced on the outer lateral surface of the metal containers extending in a direction parallel to the longitudinal axis of the metal containers, and
- a trimming and brushing machine having a cutting part with a cutting blade for cutting an excess part of the open end of the metal containers and a brushing part having a brush for brushing the outer lateral surface of the metal containers and an actuator for rotating the metal containers about their longitudinal axis so that they are brushed by the brush.

The trimming and brushing machine comprises an inspection device having an illumination source oriented to illuminate the outer lateral surface of the metal containers, a camera oriented to capture images of the outer lateral surface illuminated by the illumination source, and an image evaluation unit configured for detecting striations in the images captured by the camera. The illumination source has an illumination plane incident on the outer lateral surface of the metal containers perpendicular to the striations, the illumination plane forming an angle of between 0-15° with respect to a plane tangent to the outer lateral surface of the metal containers, and wherein the actuator of the trimming and brushing machine rotates the metal containers about its longitudinal axis during the inspection of the metal containers, such that the camera obtains images of the outer lateral surface of the metal containers during at least one complete revolution of the metal containers about its longitudinal axis, and wherein the image evaluation unit is further configured for measuring a depth value of the striations as a function of the light reflected from the outer lateral surface of the metal containers, comparing the depth value with a depth threshold value and determining whether the depth value exceeds the depth threshold value to check if the metal containers are suitable.

In this way, the actuators of the brushing part of the cutting and brushing machine are used to rotate the metal containers for inspection. In addition, the inspection device is arranged close to the extrusion press where the striations are produced, so that defective containers can be detected at an early point in the installation before they are fully processed on subsequent machines in the installation.

These and other advantages and features of the invention will become apparent in view of the figures and the detailed description of the invention.

### DESCRIPTION OF THE DRAWINGS

Figure 1 shows a block diagram of an example of a metal container manufacturing installation.
Figure 2 shows a schematic example of the transformation of a metal disc into a metal container in an extrusion press.
Figure 3 shows the inspection device according to a first example of the invention.
Figure 4 shows a top view of the inspection device of the previous figure with the illumination source striking the outer lateral surface of a metal container.
Figure 5 shows the inspection device according to a second example of the invention.
Figure 6 shows a schematic example of the trimming and brushing machine of the metal container manufacturing installation where the inspection device is arranged.

### DETAILED ACCOUNT OF THE INVENTION

The manufacture of metal containers, particularly aluminium or steel containers, for containing beverages, food, or cosmetic and pharmaceutical products (cans of beverages, aerosols, etc.), requires a process in which different machines arranged in an installation for manufacturing metal containers 10 are used. Machines of different types can be used depending on the operations that must be performed to manufacture the container 10, and the machines can be arranged in different ways in the installation. In the installation, containers are processed continuously on a container manufacturing line.

The machines are automatically connected by means of transfer units, such as linear conveyor belts, rotating carousels, or similar elements, which transfer the containers 10 from one machine to another. The manufacturing line is a high-speed line, where the order of 200 containers can be processed per minute.

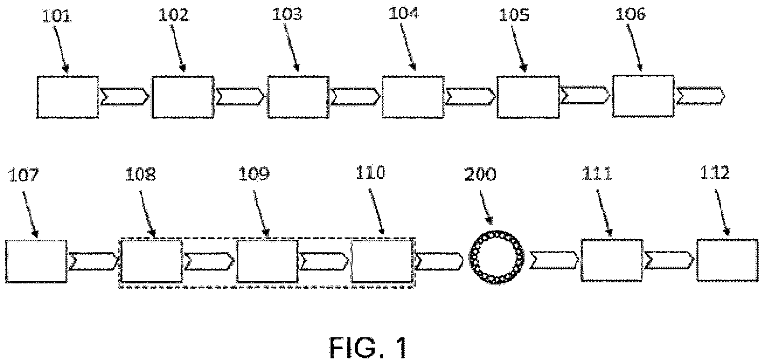

Figure 1 shows a block diagram of a non-limiting example of an installation for manufacturing metal containers 10. The installation comprises a feeder 101, an extrusion press 102, a trimming and brushing machine 103, a washing machine 104, a drying machine 105, an internal varnishing machine 106, a polymerization furnace 107, a print set comprising a glazing machine 108, a lithographic printing machine 109, and an overprint varnishing machine 110, a necking machine 200, an inspection machine 111, and a packaging machine 112.

The metal discs 1 are lubricated and supplied from the feeder 101 to the extrusion press 102 where the discs 1 are extruded to form metal containers 10. Preferably the discs 1 are aluminium discs.

Each metal container 10 obtained in the extrusion press 102 has a cylindrical body with an outer lateral surface 11, a bottom and an open end opposite the bottom. The metal container 10 has a longitudinal axis X extending along the cylindrical body of the metal container.

The open end of the containers 10 is trimmed in the trimming machine 103 to remove impurities, and the containers 10 are brushed. The containers 10 are then washed in the washing machine 104 to remove impurities that may remain in the metal, for example, with alkaline water, and the containers 10 are then dried in the drying machine 105.

After drying, a coating 15 is applied on the inside of the cylindrical body 11 of the containers 10 in the internal varnishing machine 106 to create a protective barrier between the metal of the container 10 and the product to be contained in the container 10. Once the coating 15 has been applied, the container 10 is heated in the polymerization furnace 107 to harden the coating.

An outer coating of the container 10 is applied in the glazing machine 108 of the print set to prepare it for printing on same in the lithographic printing machine 109, and the container 10 is then externally coated in the overprint varnishing machine 110 to protect the print.

The open end of the container 10 is then deformed in the necking machine 200 to create a neck that is configured to receive a closure element for closing the container 10, such as the valve of an aerosol sprayer. Lastly, the container 10 is inspected in the inspection machine 111 to detect cracks in any area of the finished container 10, and lastly, the containers 10 are grouped together in the packaging machine 112 by batches to be sent to an external factory where the containers 10 are filled with the final product (beverages, foods, or cosmetic and pharmaceutical products), and the open end of the containers 10 is closed with the closure element.

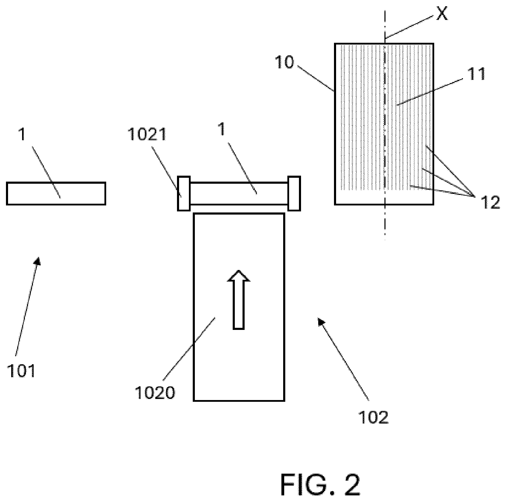

Figure 2 shows a schematic example of the transformation of a metal disc 1 into a metal container 10 in the extrusion press 102. The extrusion press 102 has an extruder 1020 for forcing the metal discs 10 to deform by passing through a die 1021 to be transformed into metal containers 10, wherein during extrusion, striations 12 are produced on the outer lateral surface 11 of the metal containers 10 extending in a direction parallel to the longitudinal axis X of the metal containers 10. Such striations 12 are produced during the displacement of the extruder 1020 when the die 1021 contacts the material of the metal disc 1. Generally, such striations 12 do not compromise the integrity of the metal container, being an aesthetic defect that can be removed during brushing in the trimming and brushing machine 103, however, in some cases the striations 12 may have an excessive depth that may cause cracks or breaks in the metal container.

Therefore, the invention proposes a metal container inspection device 10 for detecting striations 12 on the outer lateral surface 11 of the metal containers 10 and assessing whether such striations 12 may compromise the integrity of the metal containers.

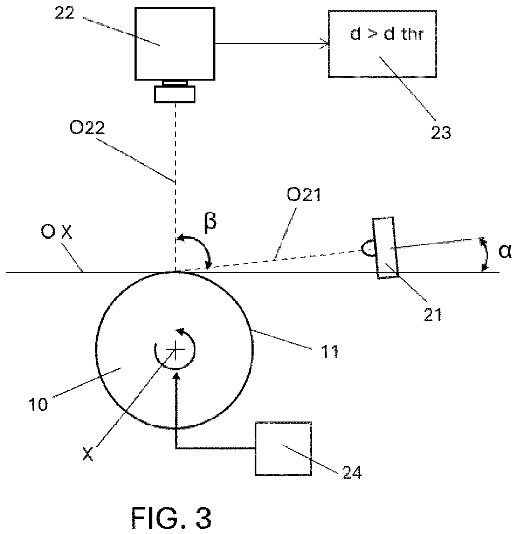

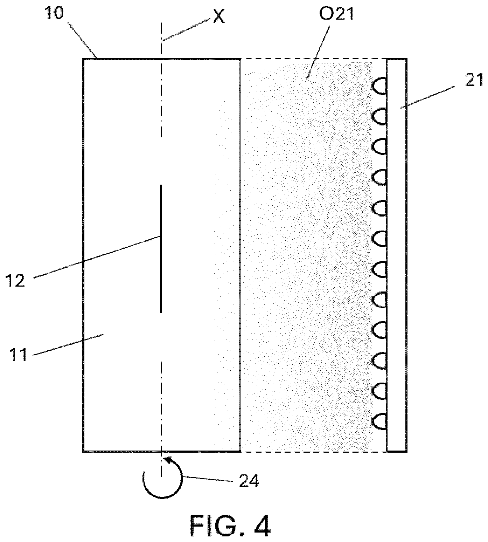

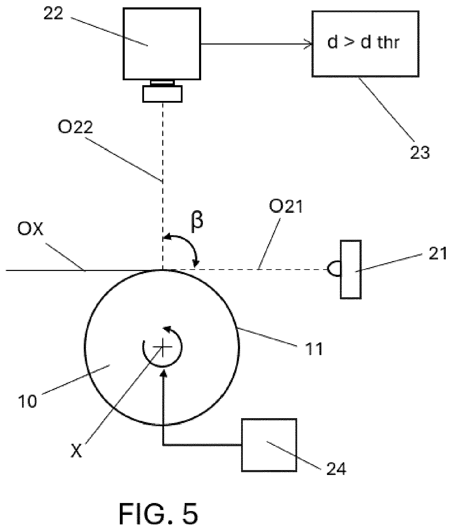

Figures 3 and 4 show a first example of the inspection device of the invention, while figure 5 shows a second example of the invention.

The inspection device of the first example comprises an illumination source 21 oriented to illuminate the outer lateral surface 11 of the metal containers 10, a camera 22 oriented to capture images of the outer lateral surface 11 illuminated by the illumination source 21, and an image evaluation unit 23 configured for detecting striations 12 in the images captured by the camera 22.

As can be seen in the first example of Figures 3 and 4, the illumination source 21 has an illumination plane O21 incident on the outer lateral surface 11 of the metal containers 10 perpendicular to the striations 12, the illumination plane O21 forming an angle α of between 0-15° with respect to a plane Ox tangent to the outer lateral surface 11 of the metal containers 10. In this way, shallow striations or flat areas without defects on the external lateral surface 11 do not reflect light, while deeper striations will reflect light that will be captured by the camera 22, the brightness captured by the camera being proportional to the depth of the striation 12.

The inspection device additionally comprises an actuator 24 for rotating the metal containers 10 about their longitudinal axis X during inspection of the metal containers 10, such that the camera 22 obtains images of the outer lateral surface 11 of the metal containers during at least one complete revolution of the metal containers 10 about their longitudinal axis X. In this way, the entire side surface of the container 10 can be inspected without the need to move the illumination source or the camera.

The image evaluation unit 23 is further configured for measuring a depth value d of the striations 12 as a function of the light reflected from the outer lateral surface 11 of the metal containers 10, comparing the depth value d with a depth threshold value d thr and determining whether the depth value d exceeds the depth threshold value d thr to check if the metal containers are suitable. The depth of the striation 12 is proportional to the reflected light, wherein the greater the depth, the greater the reflected light. The depth threshold value that determines whether a container is suitable or not can be established according to various criteria, such as the thickness of the metal container, the type of product to be contained in the container, the internal pressure to which the container is to be subjected, etc.

The image evaluation unit 23 may include a microprocessor, a microcontroller, a digital signal processor (DSP), an application specific integrated circuit (ASIC), a field programmable gate array (FPGA) or any digital or analogue circuit configured for executing program instructions and/or processing data.

Figure 5 shows the second example of the invention, which is identical to the first example, except for the angle formed by the illumination plane O21 with the external lateral surface. Therefore, everything described above for the first example is understood to be equally described for the second example.

Preferably, as shown in the second example of figure 5, the illumination plane O21 forms an angle α of 0° with respect to the plane Ox tangent to the external lateral surface 11 of the metal containers 10. That is to say, the illumination plane O21 is tangent to the external lateral surface 11 of the metal containers 10. In this way, the detection of the striations 12 is improved since the camera only receives the light reflected by the external lateral surface 11, which will be the light reflected due to the existence of striations, while the rest of the light sent by the illumination source is not reflected by the surface in the direction of the camera and therefore remains outside the field of view of the camera.

Even more preferably, and as also shown in the second example of figure 5, the camera 22 has a viewing plane O22 facing the outer lateral surface 11 of the metal containers 10 illuminated by the illumination source 21, the viewing plane O21 forming an angle β of 90° with the illumination plane O21 of the illumination source 21, thus improving the detection of the striations.

The invention also proposes an installation for manufacturing metal containers comprising an inspection device as described in the above examples.

The metal container manufacturing installation comprises a feeder 101 for supplying metal discs 1, an extrusion press 102 for extruding the metal discs 1 and forming metal containers 10 and a trimming and brushing machine 103. Additionally, the installation may comprise any or all of the other machines described in the example of figure 1.

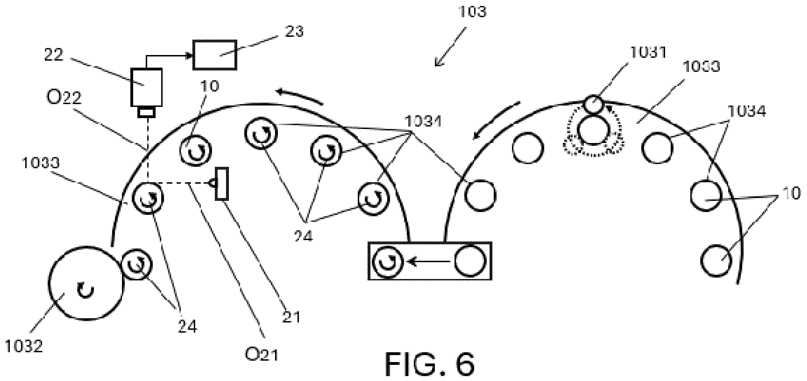

According to the invention, and as depicted in figure 6, the inspection device is arranged on the trimming and brushing machine 103.

The trimming and brushing machine 103 has a cutting part and a brushing part. The cutting part has a cutting blade 1031 for cutting an excess part of the open end of the metal containers 10 and the brushing part has a brush 1032 for brushing the outer lateral surface 11 of the metal containers 10 and an actuator 24 for rotating the metal containers 10 about their longitudinal axis X so that they are brushed by the brush 1032. Both the cutting part 1031 and the brushing part 1032 have a respective rotating plate 1033 with several stations 1034 on which the metal containers 10 are located. In the cutting part, the cutting blade 1031 surrounds the metal container 10 to cut off the excess part of the container 10 while the container 10 is fixed at its station, while in the brushing part, each of the stations 1034 on which the metal containers 10 are located has a respective actuator 24 to rotate the metal containers 10, so that when the rotating plate 1033 of the brushing part positions one of the stations 1034 in front of the brush 1032, the metal container 10 of that station 1034 rotates by action of its actuator 24 while the brush 1032 acts on the external lateral surface 11 of the metal container 10 brushing it.

In this way, the inspection device is arranged on the trimming and brushing machine 103 by taking advantage of the actuators 24 of the trimming and brushing machine 103 to rotate the metal containers 10 about their longitudinal axis X and carry out the inspection. Specifically, the inspection device is arranged in the brushing part of the trimming and brushing machine 103 in a radial position prior to the position in which the brush 1032 is arranged, and therefore, the inspection is performed before the brush 1032 acts on the external lateral surface 11 of the metal container 10.

## Claims

1. Metal container inspection device for detecting striations, wherein the metal containers (10) have a cylindrical body with an outer lateral surface (11), a bottom, an open end opposite the bottom and a longitudinal axis (X) extending along the cylindrical body of the metal container (10), the striations (12) extending in a direction parallel to the longitudinal axis (X) of the metal container (10), wherein the inspection device comprises an illumination source (21) oriented to illuminate the outer lateral surface (11) of the metal containers (10), a camera (22) oriented to capture images of the outer lateral surface (11) illuminated by the illumination source (21), and an image evaluation unit (23) configured for detecting striations (12) in the images captured by the camera (22), **characterised in that** the illumination source (21) has an illumination plane (O21) incident on the outer lateral surface (11) of the metal containers (10) perpendicular to the striations (12), the illumination plane (021) forming an angle (α) of between 0-15° with respect to a plane (Ox) tangent to the outer lateral surface (11) of the metal containers (10), and wherein the inspection device further comprises an actuator (24) for rotating the metal containers (10) about its longitudinal axis (X) during inspection of the metal containers (10), such that the camera (22) obtains images of the outer lateral surface (11) of the metal containers (10) during at least one complete revolution of the metal containers (10) about its longitudinal axis (X), and wherein the image evaluation unit (23) is further configured for measuring a depth value (d) of the striations (12) as a function of the light reflected from the outer lateral surface (11) of the metal containers (10), comparing the depth value (d) with a depth threshold value (d thr) and determining whether the depth value (d) exceeds the depth threshold value (d thr) to check if the metal containers are suitable.

2. Device according to claim 1, wherein the illumination plane (O21) forms an angle (α) of 0° with respect to the plane (Ox) tangent to the outer lateral surface (11) of the metal containers (10).

3. Device according to claim 2, wherein the camera (22) has a viewing plane (O22) facing the outer lateral surface (11) of the metal containers (10) illuminated by the illumination source (21), the viewing plane (O21) forming an angle (β) of 90° with the illumination plane (O21) of the illumination source (21).

4. Device according to any one of the preceding claims, wherein the actuator (24) forms part of a trimming and brushing machine (103) of an installation for manufacturing metal containers.

5. Metal container manufacturing installation, comprising:
- a feeder (101) to supply metal discs (1),
- an extrusion press (102) for extruding metal discs (1) to form metal containers (10), wherein the metal containers (10) have a cylindrical body with an outer lateral surface (11), a bottom, an open end opposite the bottom and a longitudinal axis (X) extending along the cylindrical body of the metal container (10), and wherein the extrusion press (102) has an extruder (1020) for forcing the metal discs (10) to deform by passing through a die (1021) to transform into metal containers (10), wherein during extrusion, striations (12) are produced on the outer lateral surface (11) of the metal containers (10) extending in a direction parallel to the longitudinal axis (X) of the metal containers (10), and
- a trimming and brushing machine (103) having a cutting part with a cutting blade (1031) for cutting an excess part of the open end of the metal containers (10) and a brushing part having a brush (1032) for brushing the outer lateral surface (11) of the metal containers (10) and an actuator (24) for rotating the metal containers (10) about their longitudinal axis (X) so that they are brushed by the brush (1032),
**characterised in that** the trimming and brushing machine (103) comprises an inspection device according to any of claims 1 to 3.

## Patentansprüche

1. Inspektionsvorrichtung für Metallbehälter zur Erkennung von Streifen, wobei die Metallbehälter (10) einen zylindrischen Körper mit einer äußeren Seitenfläche (11), einen Boden, ein dem Boden gegenüberliegendes offenes Ende und eine Längsachse (X), welche sich entlang des zylindrischen Körpers des Metallbehälters (10) erstreckt, aufweisen, wobei sich die Streifen (12) in eine Richtung parallel zur Längsachse (X) des Metallbehälters (10) erstrecken, wobei die Inspektionsvorrichtung eine Beleuchtungsquelle (21), welche dazu orientiert ist, die äußere Seitenfläche (11) der Metallbehälter (10) zu beleuchten, eine Kamera (22), welche dazu orientiert ist, Bilder der äußeren Seitenfläche (11), welche von der Beleuchtungsquelle (21) beleuchtet wird, zu erfassen, und eine Bildauswertungseinheit (23), welche zur Erkennung von Streifen (12) in den mittels der Kamera (22) erfassten Bilder ausgebildet ist, umfasst, **dadurch gekennzeichnet, dass** die Beleuchtungsquelle (21) eine Beleuchtungsebene (021) aufweist, welche auf die äußere Seitenfläche (11) der Metallbehälter (10) senkrecht zu den Streifen (12) auftrifft, wobei die Beleuchtungsebene (O21) einen Winkel (α) von zwischen 0-15° in Bezug auf eine Ebene (Ox) tangential zur äußeren Seitenfläche (11) der Metallbehälter (10) bildet, und wobei die Inspektionsvorrichtung zusätzlich ein Stellglied (24) zum Rotieren der Metallbehälter (10) um deren Längsachse (X) herum während der Inspektion der Metallbehälter (10) umfasst, sodass die Kamera (22) Bilder der äußeren Seitenfläche (11) der Metallbehälter (10) während mindestens einer kompletten Umdrehung der Metallbehälter (10) um deren Längsachse (X) herum erhält, und wobei die Bildauswertungseinheit (23) zusätzlich dazu ausgebildet ist, einen Tiefenwert (d) der Streifen (12) in Abhängigkeit vom Licht zu messen, welches von der äußeren Seitenfläche (11) der Metallbehälter (10) reflektiert wird, wobei der Tiefenwert (d) mit einem Tiefenschwellenwert (d thr) verglichen wird und bestimmt wird, ob der Tiefenwert (d) den Tiefenschwellenwert (d thr) überschreitet, um zu prüfen, ob die Metallbehälter geeignet sind.

2. Vorrichtung nach Anspruch 1, wobei die Beleuchtungsebene (O21) einen Winkel (α) von 0° in Bezug auf die Ebene (Ox) tangential zur äußeren Seitenfläche (11) der Metallbehälter (10) bildet.

3. Vorrichtung nach Anspruch 2, wobei die Kamera (22) eine Sichtebene (O22) aufweist, welche der äußeren Seitenfläche (11) der Metallbehälter (10), welche von der Beleuchtungsquelle (21) beleuchtet wird, zugewandt ist, wobei die Sichtebene (O21) einen Winkel (β) von 90° mit der Beleuchtungsebene (021) der Beleuchtungsquelle (21) bildet.

4. Vorrichtung nach einem der vorhergehenden Ansprüche, wobei das Stellglied (24) Teil einer Abgrat- und Bürstmaschine (103) einer Anlage zur Herstellung von Metallbehältern ist.

5. Anlage zur Herstellung von Metallbehältern, umfassend:
- eine Speiseeinrichtung (101), um Metallscheiben (1) zuzuführen,
- eine Extrusionspresse (102) zum Extrudieren von Metallscheiben (1), um Metallbehälter (10) zu bilden, wobei die Metallbehälter (10) einen zylindrischen Körper mit einer äußeren Seitenfläche (11), einen Boden, ein dem Boden gegenüberliegendes offenes Ende und eine Längsachse (X), welche sich entlang des zylindrischen Körpers des Metallbehälters (10) erstreckt, aufweisen, und wobei die Extrusionspresse (102) einen Extruder (1020) aufweist, um die Metallscheiben (10) zu zwingen sich zu verformen, indem sie durch eine Pressform (1021) durchgehen, um sich in Metallbehälter (10) zu verwandeln, wobei während der Extrusion Streifen (12) auf der äußeren Seitenfläche (11) der Metallbehälter (10) erzeugt werden, welche sich in eine Richtung parallel zur Längsachse (X) der Metallbehälter (10) erstrecken, und
- eine Abgrat- und Bürstmaschine (103), welche ein Schnittteil mit einer Schneideklinge (1031) zum Schneiden eines überschüssigen Teils des offenen Endes der Metallbehälter (10) und ein Bürstteil aufweist, welches eine Bürste (1032) zum Bürsten der äußeren Seitenfläche (11) der Metallbehälter (10) und ein Stellglied (24) zum Rotieren der Metallbehälter (10) um deren Längsachse (X) herum, sodass sie von der Bürste (1032) gebürstet werden, aufweist,
**dadurch gekennzeichnet, dass** die Abgrat- und Bürstmaschine (103) eine Inspektionsvorrichtung nach einem der Ansprüche 1 bis 3 umfasst.

## Revendications

1. Équipement d'inspection de récipients métalliques pour détecter des striations, dans lequel les récipients métalliques (10) présentent un corps cylindrique comportant une surface latérale extérieure (11), un fond, une extrémité ouverte opposée au fond et un axe longitudinal (X) s'étendant le long du corps cylindrique du récipient métallique (10), les striations (12) s'étendant dans une direction parallèle à l'axe longitudinal (X) du récipient métallique (10), dans lequel l'équipement d'inspection comprend une source d'éclairage (21) orientée pour éclairer la surface latérale extérieure (11) des récipients métalliques (10), une caméra (22) orientée pour capturer des images de la surface latérale extérieure (11) éclairée par la source d'éclairage (21), et une unité d'évaluation d'images (23) configurée pour détecter des striations (12) dans les images capturées par la caméra (22), **caractérisé en ce que** la source d'éclairage (21) présente un plan d'éclairage (021) incident sur la surface latérale extérieure (11) des récipients métalliques (10) perpendiculaire aux striations (12), le plan d'éclairage (021) formant un angle (α) de 0 à 15° par rapport à un plan (Ox) tangent à la surface latérale extérieure (11) des récipients métalliques (10), et dans lequel l'équipement d'inspection comprend en outre un actionneur (24) pour faire tourner les récipients métalliques (10) autour de leur axe longitudinal (X) pendant l'inspection des récipients métalliques (10), de telle sorte que la caméra (22) obtienne des images de la surface latérale extérieure (11) des récipients métalliques (10) pendant au moins une révolution complète des récipients métalliques (10) autour de leur axe longitudinal (X), et dans lequel l'unité d'évaluation d'images (23) est en outre configurée pour mesurer une valeur de profondeur (d) des striations (12) en fonction de la lumière réfléchie par la surface latérale extérieure (11) des récipients métalliques (10), comparer la valeur de profondeur (d) à une valeur seuil de profondeur (d thr) et déterminer si la valeur de profondeur (d) dépasse la valeur seuil de profondeur (d thr) afin de vérifier si les récipients métalliques sont aptes.

2. Équipement selon la revendication 1, dans lequel le plan d'éclairage (021) forme un angle (α) de 0° par rapport au plan (Ox) tangent à la surface latérale extérieure (11) des récipients métalliques (10).

3. Équipement selon la revendication 2, dans lequel la caméra (22) présente un plan de visualisation (022) faisant face à la surface latérale extérieure (11) des récipients métalliques (10) éclairée par la source d'éclairage (21), le plan de visualisation (021) formant un angle (β) de 90° avec le plan d'éclairage (021) de la source d'éclairage (21).

4. Équipement selon l'une quelconque des revendications précédentes, dans lequel l'actionneur (24) fait partie d'une machine de rognage et de brossage (103) d'une installation de fabrication de récipients métalliques.

5. Installation de fabrication de récipients métalliques, comprenant :
- un dispositif d'alimentation (101) pour fournir des disques métalliques (1),
- une presse d'extrusion (102) pour extruder des disques métalliques (1) afin de former des récipients métalliques (10), dans laquelle les récipients métalliques (10) présentent un corps cylindrique comportant une surface latérale extérieure (11), un fond, une extrémité ouverte opposée au fond et un axe longitudinal (X) s'étendant le long du corps cylindrique du récipient métallique (10), et dans laquelle la presse d'extrusion (102) comporte une extrudeuse (1020) pour contraindre les disques métalliques (10) à se déformer en passant à travers une filière (1021) afin de se transformer en récipients métalliques (10), dans laquelle, pendant l'extrusion, des striations (12) sont produites sur la surface latérale extérieure (11) des récipients métalliques (10), s'étendant dans une direction parallèle à l'axe longitudinal (X) des récipients métalliques (10), et
- une machine de rognage et de brossage (103) comportant une partie de coupe pourvue d'une lame de coupe (1031) pour couper une partie excédentaire de l'extrémité ouverte des récipients métalliques (10) et une partie de brossage pourvue d'une brosse (1032) pour brosser la surface latérale extérieure (11) des récipients métalliques (10) et d'un actionneur (24) pour faire tourner les récipients métalliques (10) autour de leur axe longitudinal (X) de sorte qu'ils soient brossés par la brosse (1032),
**caractérisée en ce que** la machine de rognage et de brossage (103) comprend un équipement d'inspection selon l'une quelconque des revendications 1 à 3.
